# EUROPEAN PATENT APPLICATION

(11) **EP 2 400 697 A1**
(43) Date of publication of application: **28.12.2011**
(21) Application number: 09840244.9
(22) Date of filing: 23.10.2009
(51) Int. Cl.: H04L 12/437, H04L 29/06

(54) **IMPLEMENTATION METHOD FOR PROTOCOL CHANNEL IN ETHERNET PROTECTION**

(30) Priority: 23.02.2009 CN 200910105640
(71) Applicant: ZTE Corporation, Shenzhen, Guangdong 518057 (CN)
(72) Inventor: WU, Shaoyong, Shenzhen Guangdong 518057 (CN); YANG, Jian, Shenzhen Guangdong 518057 (CN); SHAO, Hong, Shenzhen Guangdong 518057 (CN)
(74) Representative: Davies, Gregory Mark
(86) International application number: PCT/CN2009/074591
(87) International publication number: WO 2010/094193

(57) **Abstract**

An implementation method for a protocol channel in Ethernet protection, and the method comprises: setting a block point of the protocol channel in Ethernet protection domain; in the protection domain, the protocol channel maintaining unblocked or maintaining unblocked or blocked synchronously with protected data channel in the protection domain depending on the type of the block point.

## Description

### Technical Field

The present invention relates to the field of communication, and more especially, to an implementation method for protocol channel in Ethernet protection.

### Background of the Related Art

All kinds of protection technologies have been applied widely in the Ethernet, that is, there are a plurality of communication paths to achieve the redundant backup between the active communication path and the standby communication path when communication is performed in the network. When both the active and standby paths are perfect, the data forwarding function of the standby path is blocked, and the protected data in the network are transmitted in the active path; when the active path malfunctions, the data forwarding function of the standby path is activated, and the protected data in the network are switched to be transmitted in the standby path, thus to switch the network from the normal state to the fault state to improve the ability of anti-malfunction. In the Ethernet protection technologies, only when the protocol frames sent from the node reach to the target node as soon as possible can the protection switching be implemented rapidly, thus to avoid losing a large amount of data due to too long switching time. The protocol channel in Ethernet protection is a physical or logic path such as the path determined by the protocol of virtual local domain network (VLAN) or the path determined by forwarding the media access control (MAC) address of protocol, for transmitting Ethernet protection protocol frames in the Ethernet, so that the Ethernet protection protocol frames can be transmitted along the corresponding path, and said path can be blocked or unblocked.

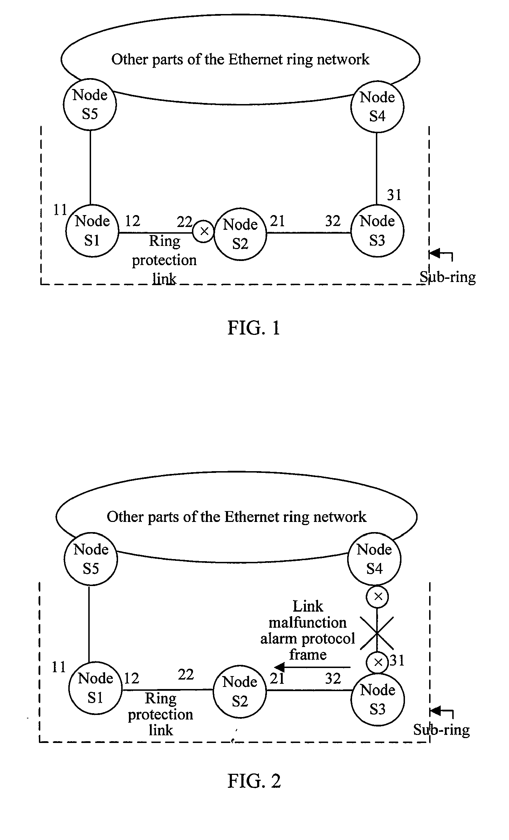

FIG. 1 is an illustration when the Ethernet protection type is ring network protection; nodes S1, S2, S3, S4 and S5 are nodes supporting the Ethernet switching function, and the Ethernet protection domain comprises the nodes S1, S2, S3, S4 and S5, as well as the links between the nodes: S5<->S1, S1<->S2, S2<->S3, and S3<->S4, S4 and S5 are boundary nodes in said Ethernet protection domain as well as interconnection nodes connecting the Ethernet protection domain with other part of the Ethernet, the interconnection node is the connection node connecting one protection domain with other networks, and sub-ring connects to other rings with two interconnection nodes, and the Ethernet protection domain is also called the Ethernet sub-ring protection domain, or simplified as sub-ring, which is a subset in the overall Ethernet. Said sub-ring connects with the other part of the Ethernet via the interconnection nodes S4 and S5, and the other part of the Ethernet can be a single ring or an interconnection structure consisting of single rings and sub-rings. One link in the sub-ring is called ring protection link, when links in the sub-ring are perfect, at least one of the two ports connecting to the ring protection link is blocked so that the protected data cannot go through the link, for example, the link between S1 and S2 in FIG. 1 is the ring protection link, when the links in the sub-ring are perfect, S2 blocks the port 22 connecting to the ring protection link so as to prevent the protected data from transmitting in the ring protection link, the protected data between the nodes only have one path to communicate with each other. When one link in the sub-ring has fault, as shown in FIG. 2, the link between S3 and S4 does not work properly, and after S3 detects the link fault, the sub-ring performs protection switching. The node S3 sends a link malfunction alarm protocol frame out, and S2 unblocks the port 22 connecting the ring protection link after receiving the link malfunction alarm protocol frame, moreover, the nodes S1, S2, S3, S4 and S5 also need to refresh the forward address table, after the sub-ring performs the protection switching, since the port connecting to the ring protection link is unblocked, the protected data between the ports has new communication path. With the Ethernet protection technologies, the reliability of the Ethernet ring network is effectively improved. In the Ethernet ring network protection switching, the protocol frames sent by one node need to reach to the other nodes as soon as possible so as to achieve rapid switching and avoid losing a large amount of protected data due to the too long switching time. For example, in FIG. 2, if the link malfunction alarm protocol frame sent immediately after the S3 detects the link fault is discarded by the blocked port of S2, the protocol frame cannot reach to S1 and S5 as soon as possible, thus S1 and S5 cannot refresh the forward address table, and the overall protection switching cannot be implemented rapidly, which leads to extremely long switching time and even the loss of a large amount of protected data. In addition, if there is no blocked node port in the protocol channel of Ethernet protection, the protocol channel itself forms a closed loop and the frames in the protocol channel will be transmitted cyclically and finally cause networking storm.

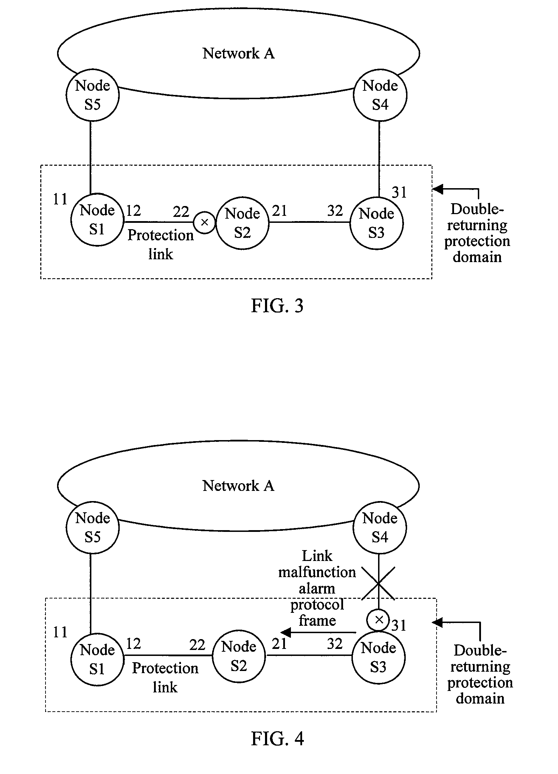

FIG. 3 is an illustration when the Ethernet protection type is double-returning protection; nodes S1, S2 and S3 are nodes supporting the Ethernet switching function and creating an Ethernet double-returning protection domain which comprises nodes S1, S2 and S3, as well as the links between the nodes: S5<->S1, S1<->S2, S2<->S3 and S3<->S4, S1 and S3 are boundary nodes in said Ethernet protection domain, and S4 and S5 are interconnection nodes connecting said Ethernet protection domain with network A. S1 connects with the network A via the interconnection node S5, S3 connects with the network A via the interconnection node S4, and the interconnection nodes S4 and S5 can transmit the Ethernet data frames between the double-returning protection domain and the network A, and the network A can be the Ethernet or a network with other technology. There is one link in the Ethernet double-returning protection domain called protection link, and when the links of Ethernet double returning protection are perfect, at least one of the node ports connecting with said protection link is blocked to prevent the protected data from passing through the protection link, for example, in FIG. 3, the link between S1 and S2 is the protection link, when the links in the double-returning protection domain are perfect, S2 blocks the port 22 connecting to the protection link to prevent the protected data from transmitting in the protection link. When one link in the double-returning protection domain has fault, as shown in FIG. 4, when the link between S3 and S4 have fault, after S3 detects the link fault, the Ethernet double-returning protection domain performs protection switching, S3 sends a link malfunction alarm protocol frame out, and after S2 receives the link malfunction alarm protocol frame, it unblocks the port 22 that connects with the protection link, moreover, S1, S2 and S3 need to refresh the forward address table, and after the Ethernet double-returning protection domain performs the protection switching, the protected data can be transmitted in the unblocked protection link which forms a new communication path. With the Ethernet double-returning protection technology, the reliability of the Ethernet double-returning network is effectively improved. In the Ethernet double-returning protection switching, the protocol frames sent by one node need to reach to the other nodes as soon as possible so as to achieve rapid switching and prevent the loss of a large amount of protected data due to the too long switching time, for example in FIG. 4, the link malfunction alarm protocol frame sent immediately after S3 detects a link fault is discarded by the blocked port of S2, the protocol frame cannot reach to S1 as soon as possible, and S1 cannot refresh the forward address table, thus the overall protection switching cannot be implemented rapidly, which makes the switching time too long and a large amount of data lost.

From the above analysis, it can be seen that in the existing protection scheme, the protocol frame sent when there is fault in a link might be discarded, thus the protocol frame cannot reach to the target node as soon as possible and the protection switching cannot be completed rapidly, or the switching time is too long and even a large amount of protected data are lost, and it is possible to cause networking storm because the protocol frame transmits cyclically in the protocol channel which forms a closed loop.

### Content of the Invention

The technical problem to be solved by the present invention is to provide an implementation method of a protocol channel in the Ethernet protection to make the Ethernet protection protocol frames reach to the target node as soon as possible and to prevent networking storm due to the closed loop formed by the protocol channel in the Ethernet protection.

The present invention discloses an implementation method of the protocol channel in the Ethernet protection, and said method is:
setting block points of the protocol channel in a protection domain of an Ethernet; in said protection domain, said protocol channel remains unblocked or remains unblocked/blocked synchronously with a protected data channel in the protection domain according to a type of the block points.

If a protection type of said Ethernet is ring network protection, said Ethernet is an Ethernet ring network, said protection domain is an Ethernet ring network protection domain; if the protection type of said Ethernet is double-returning protection, said protection domain is an Ethernet double-returning protection domain.

If said protection domain is the Ethernet ring network protection domain, the block points of the protocol channel are interconnection nodes ports in the Ethernet protection domain and/or node ports unblocking or blocking the protected data channel in the Ethernet ring network protection domain; if said protection domain is an Ethernet double-returning protection domain, the block points of the protocol channel are interconnection node ports in the Ethernet double-returning protection domain.

If said block points are interconnection node ports in the Ethernet ring network protection domain or the Ethernet double-returning protection domain, said protocol channel remains open; if said block points are node ports unblocking or blocking the protected data channel in the Ethernet ring network protection domain, said protocol channel and said protected data channel remains unblocked or blocked synchronously.

If the interconnection nodes in the Ethernet ring network protection domain are able to connect to other part of said Ethernet ring network, so as said protocol channel.

If there is a protocol channel configured between the block points in the Ethernet double-returning protection domain and the boundary node ports in said Ethernet double-returning protection domain, said protocol channel remains blocked.

Said protocol channel has at least one block point.

The present invention makes the protocol channel have at least one block point in the Ethernet protection domain, which guarantees that the protocol channel is unblocked when the link has fault, thus to avoid networking storm due to the closed loop formed by the protocol channel in the Ethernet protection, to make the protocol frame reach to the target node as soon as possible, so as the achieve the purpose of rapid switching and to significantly improve the network performance.

### Brief Description of Drawings

FIG. 1 is an illustration of Ethernet ring network protection;
FIG. 2 is an illustration of performing protection switching after there is link fault in FIG. 1;
FIG. 3 is an illustration of Ethernet double-returning protection;
FIG. 4 is an illustration of performing protection switching after there is link fault in FIG. 3;
FIG. 5 is a flow chart of the method of the present invention;
FIG. 6 is an illustration of the first embodiment in accordance with the method of the present invention;
FIG. 7 is an illustration of the second embodiment in accordance with the method of the present invention;
FIG. 8 is an illustration of the third embodiment in accordance with the method of the present invention.

### Preferred Embodiments of the Present Invention

The present invention will be illustrated in further detail in combination with the preferred embodiments with reference to the accompanying figures; however, the present invention is not limited to the following embodiments.

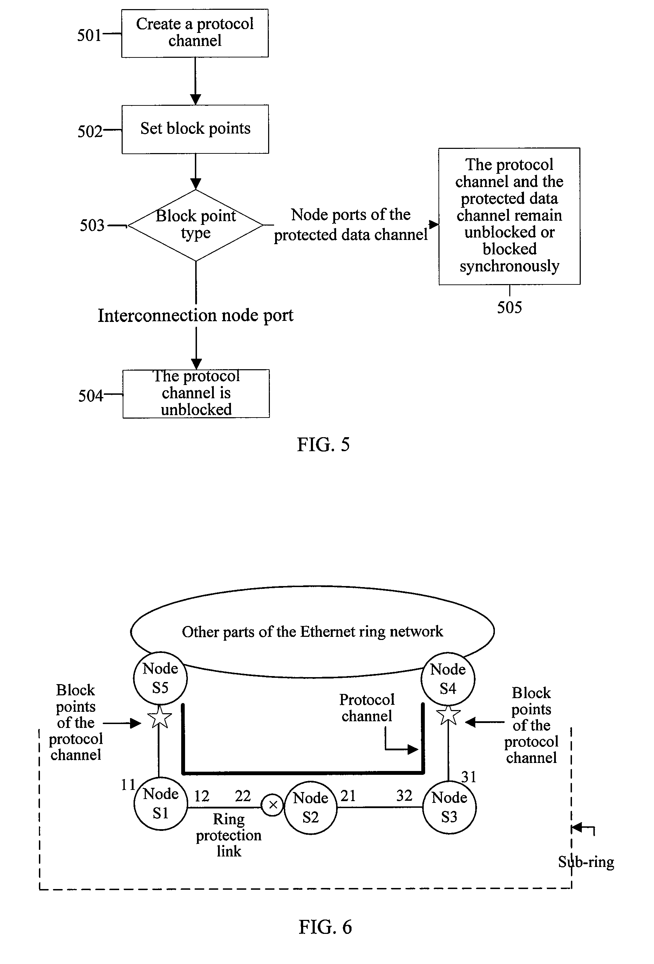

FIG. 5 is an overall flow chart of the method of the present invention, and it comprises:
step 501: creating a protocol channel to transmit the Ethernet protection protocol frames according to the protocol VLAN or MAC address.

For example in FIG. 1, the VLAN 100 can be used in the sub-ring to transmit the Ethernet protection protocol frames.
Step 502: Setting block points of the protocol channel in the Ethernet protection domain.

The block points are used to prevent networking storm formed by the protocol frames due to closed ring formed by the Ethernet protection protocol channel.

If the Ethernet protection type is ring network protection, said protection domain is an Ethernet ring network protection domain; if said Ethernet protection type is double-returning protection, said protection domain is an Ethernet double-returning protection domain.

The protocol channel has at least one block point; if said protection domain is an Ethernet ring network protection domain, the block points of the protection channel are interconnection node ports in the Ethernet ring network protection domain and/or node ports unblocking or blocking the protected data channel in the Ethernet ring network protection domain; if said protection domain is an Ethernet double-returning protection domain, the block points of the protection channel are interconnection node ports in the Ethernet double-returning protection domain.
Step 503: judging the type of the block points, if they are interconnection node ports in the Ethernet ring network protection domain or the Ethernet double-returning protection domain, proceeding to step 504; if they are node ports unblocking or blocking the protected data channel in the Ethernet ring network protection domain, proceeding to step 505;
Step 504: The Ethernet protection protocol channel remaining unblocked;
Step 505: The Ethernet protection protocol channel and the protected data channel remaining unblocked or blocked at the same time.

FIG. 6 is an illustration of the first embodiment in accordance with said method of the present invention; in combination with FIG. 1, the Ethernet protection type in this embodiment is ring network protection, and it has a ring protection link, and port 22 of the node S2 is a node port blocking the ring protection link, and the block points of the protocol channel are the interconnection node ports S4 and S5 in the Ethernet ring network protection domain, and in the Ethernet ring network protection domain, the protocol channel in the Ethernet ring network protection domain remains blocked at the sub-ring ports of S4 and S5, while unblocked at other node ports in the Ethernet ring network protection domain, when the links in the Ethernet ring network protection domain are normal, S2 blocks the port 22, that is, the ring protection link in the Ethernet ring network protection domain is blocked, the protected data cannot be through this port, but the Ethernet protection protocol frame can be through this port, that is, the Ethernet protection protocol channel is unblocked at this port. Therefore, when there is link fault between S3 and S4, after S3 detects the link fault, it sends a link malfunction alarm protocol frame out, and since the Ethernet protection protocol channel is unblocked at the port 22 of S2, the protocol frame can be transmitted via the port to reach to the other nodes in the Ethernet ring network protection domain as soon as possible, thus to guarantee the rapid protection switching of the Ethernet.

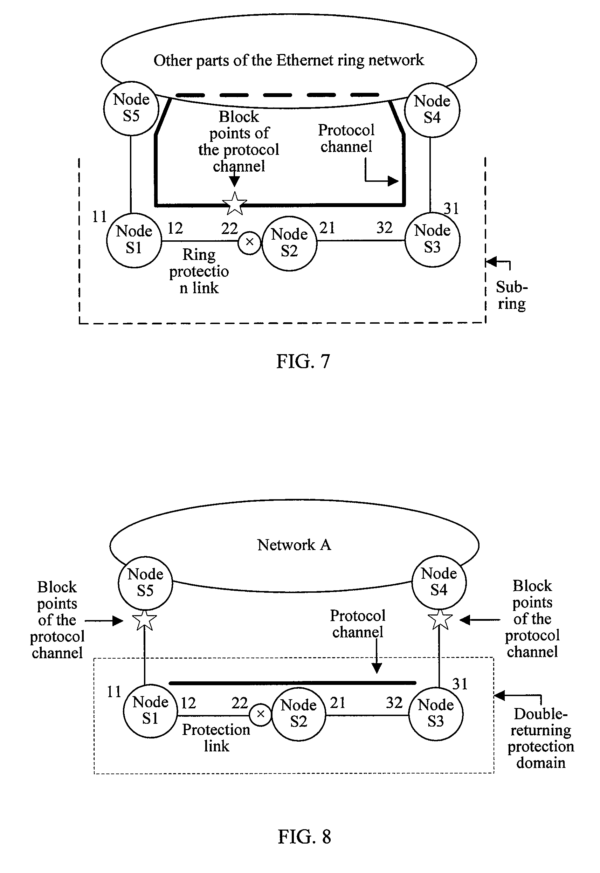

FIG. 7 is an illustration of the second embodiment in accordance with said method of the present invention, and in the present embodiment, the block points of the protocol channel are set as node ports unblocking or blocking the protected data channel in the Ethernet ring network protection domain, which is S2 in FIG. 7, moreover, the Ethernet ring network protection domain connects with other parts of the Ethernet ring network to form a closed loop. When the links in the Ethernet ring network protection domain are normal, S2 blocks the port 22, that is, the protected data cannot go through this port, nor can the Ethernet protection protocol frame. When the link between S3 and S4 has fault, after S3 and S4 detect the link fault, they both send a link malfunction alarm protocol frame out, and since the Ethernet protection protocol channel is blocked at the port 22 of S2, and the port is only unblocked after receiving the protocol frame sent from S3, however, it takes time to open the port, the protocol frames received before the port is unblocked are discarded, thus the protocol frames sent by S3 can reach to the node S2 rapidly, but cannot reach to S1 and S5 rapidly, however, since the Ethernet ring network protection domain and the other parts of the Ethernet make up a closed loop, that is, the Ethernet protection protocol frames can be transmitted in other parts of the Ethernet ring network, the protocol frames sent from one node in the Ethernet ring network protection domain can be transmitted to other nodes in the Ethernet ring network protection domain via the other parts of the Ethernet, therefore, the link malfunction alarm protocol frames sent by S4 are transmitted rapidly to S5 and S1 via the other parts of the Ethernet ring network, that is, the protocol channel can connect to the other parts of the Ethernet ring network, each node in the Ethernet ring network protection domain can receive the Ethernet ring network protocol frames as soon as possible, thus achieve rapid protection switching.

FIG. 8 is an illustration of the third embodiment in accordance with the method of the present invention, in combination with FIG. 3, the Ethernet protection type is double-returning protection in the present embodiment, that is, the protection domain is an Ethernet double-returning protection domain, since the Ethernet protection protocol frames cannot be guaranteed to be transmitted in other networks when the Ethernet double-returning protection domain connects with the other networks, and for the Ethernet double-returning protection domain, the block points of the protocol channel are set as interconnection node ports S4 and/or S5 (there are two block points S4 and S5 of the protocol channel in the present embodiment), thus in the Ethernet double-returning protection domain, the protocol channel remains unblocked, but blocked on the boundary link in the Ethernet double-returning protection domain, that is, if there are protocol channels configured between S1 and S5 and also between S3 and S4, the protocol channels between S1 and S5 and between S3 and S4 are all blocked. The method for blocking the protocol channel between S1 and S5 comprises: blocking the port 11 connecting S1 with S5; or blocking the other port connecting S5 with S1. The method for blocking the protocol channel between S3 and S4 is the same as that for blocking the protocol channel between S1 and S5. In the Ethernet double-returning protection domain, no matter whether the ports of the protected data channel are blocked or not, the Ethernet protection protocol channel is always unblocked. Therefore, when the link between S3 and S4 has fault, after S3 detects the link fault, it sends a link malfunction alarm protocol frames out, and since the Ethernet protection protocol channel is unblocked at the port 22 of S2, the protocol frames can be transmitted through this port and reach to each node in the double-returning domain as soon as possible, thus to guarantee the rapid protection switching of the Ethernet double-returning network.

### Industrial Applicability

The present invention makes that the protocol channel has at least one block point in the Ethernet protection domain to guarantee that the protocol channel is unblocked when the link has fault, to prevent networking storm due to the closed loop formed by the Ethernet protection protocol channel, to make the protocol frames reach to the target node as soon as possible, so as to achieve the rapid switching and to significantly improve the network performance.

## Claims

1. An implementation method of a protocol channel in Ethernet protection, and said method comprising:
setting block points of the protocol channel in a protection domain of an Ethernet; in said protection domain, said protocol channel remaining unblocked or remaining unblocked/blocked synchronously with a protected data channel in the protection domain according to a type of the block points.

2. The implementation method of a protocol channel in Ethernet protection of claim 1, wherein, if a protection type of said Ethernet is ring network protection, said Ethernet is an Ethernet ring network, said protection domain is an Ethernet ring network protection domain; if the protection type of said Ethernet is double-returning protection, said protection domain is an Ethernet double-returning protection domain.

3. The implementation method of a protocol channel in Ethernet protection of claim 2, wherein, if said protection domain is the Ethernet ring network protection domain, the block points are interconnection nodes ports in the Ethernet protection domain and/or node ports unblocking or blocking the protected data channel in the Ethernet ring network protection domain; if said protection domain is an Ethernet double-returning protection domain, the block points are interconnection node ports in the Ethernet double-returning protection domain.

4. The implementation method of a protocol channel in Ethernet protection of claim 1 or 3, wherein, if said block points are interconnection node ports in the Ethernet ring network protection domain or the Ethernet double-returning protection domain, said protocol channel remains unblocked; if said block points are node ports unblocking or blocking the protected data channel in the Ethernet ring network protection domain, said protocol channel and said protected data channel remains unblocked or blocked synchronously.

5. The implementation method of a protocol channel in Ethernet protection of claim 2, wherein, if the interconnection nodes in the Ethernet ring network protection domain are able to connect to other part of said Ethernet ring network, so as said protocol channel.

6. The implementation method of a protocol channel in Ethernet protection of claim 3, wherein, if there is a protocol channel configured between the block points in the Ethernet double-returning protection domain and boundary node ports in said Ethernet double-returning protection domain, said protocol channel remains blocked.

7. The implementation method of a protocol channel in Ethernet protection of claim 1, wherein, said protocol channel has at least one block point.
